# EUROPEAN PATENT APPLICATION

(11) **EP 4 105 269 A1**
(43) Date of publication of application: **21.12.2022**
(21) Application number: 22179354.0
(22) Date of filing: 16.06.2022
(51) Int. Cl.: C08J 11/04, C08L 83/04

(54) **RECYCLED SILICONE RUBBER AND PREPARATION METHOD THEREOF**

(30) Priority: 16.06.2021 CN 202110667989
(71) Applicant: Qingdao Huilu Silicone Co., Ltd., Qingdao City, Shandong 266000 (CN)
(72) Inventor: Ha, Dong Jin, Qingdao City, 266000 (CN)
(74) Representative: Chung, Hoi Kan

(57) **Abstract**

The present invention provides a recycled silicone rubber and preparation method thereof and belongs to the technical field of silicone rubber. The recycled silicone rubber comprises following ingredients and raw materials in part by weight: methyl vinyl silicone gum 100 parts, white carbon black 30-60 parts, recycled silicone materials 1-60 parts, a constitution controller 0.3-4 parts, a silane coupling agent 0.1-0.3 parts, and releasing agents 0.1-0.5 parts. In the present invention, vulcanized silicone rubber is crushed physically and ground to be particles of certain grain sizes, and recycled and utilized as raw materials for producing silicone rubber. The silicone rubber obtained with this method has efficiently addressed problems of high cost, high pollution and high risks associated with recycling of the vulcanized silicone rubber on the basis of meeting requirements on hardness, elasticity, heat resistance, breakage tensile strength etc.

## Description

### Technical field

The present invention relates to the technical field of silicone rubber, especially a recycled silicone rubber and preparation method thereof.

### Background technology

With deepening of knowledge on features of silicone rubber of being high and low temperature resistant, oil proof, poison free, flaming retardant and chemically stable, silicone rubber has been widely used in many industries such as space fields, pharmaceutical fields, automobile accessory fields, living goods etc. However, treatment or processing of vulcanized silicone rubber (including defective vulcanized silicone rubber products and silicone flash material) has been a problem in the industry. Currently, strong alkalies are used to degrade and generate DMC (dimethylcyclosiloxane mixture) raw materials in high temperature conditions. However, recycling cost associated with this process is high, environment pollution is severe and the process is susceptible to explosion during degradation in high temperature conditions, which may cause heavy safety hazards.

### Summary of invention

The present invention provides a recycled silicone rubber and preparation method thereof, by grinding physically vulcanized silicone rubber and grinding the same to be particles of certain grain sizes and recycling and utilizing the particles as raw materials for producing silicone rubber, on the basis of meeting requirements on hardness, elasticity, heat resistance, breaking tensile strength etc., the problems of high cost, high pollution and high risks corresponding to recycling of vulcanized silicone rubber have been efficiently addressed.

To realize the foregoing purpose, the present invention provides a recycled silicone rubber, which comprises following ingredients and raw materials in part by weight: methyl vinyl silicone gum 100 parts, white carbon black 30-60 parts, recycled materials 1-60 parts, a constitution controller 0.3-4 parts, a silane coupling agent 0.1-0.3 parts, and releasing agents 0.1-0.5 parts.

In the foregoing technical solution, by mixing raw materials such as the methyl vinyl silicone gum and the releasing agents, adding the recycled silicone materials of a certain ratio and grain size without increasing a mass ratio of the white carbon black, the silicone rubber obtained meets requirements on hardness, elasticity, heat resistance and breakage tensile strength etc. while efficiently addressed the problems of high cost, high pollution and high risks associated with vulcanized silicone rubber recycling.

Preferably, a specific surface area of the white carbon black is 175 - 225 m²/g. It shall be appreciated that in the present invention, a purpose of defining the specific surface area of the white carbon block is that the white carbon block of a specific surface area in this range can increase reinforcing effects on the silicone rubber so as to improve elastic strength and breaking tensile strength of the silicone rubber.

Preferably, the white carbon black is white carbon black that has not undergone surface treatment, selected from fumed silica or precipitation silica. It shall be comprehended that the white carbon black selected in the present solution has good dispersity and reinforcing performance when used in the silicone rubber and can further improve reinforcing effects of the white carbon black on the silicone rubber.

Preferably, the recycled materials are vulcanized silicone rubber powders after physical crushing and grinding. Further preferably, after grinding, the recycled silicone materials are passed through a 30-80-mesh screen. Grain sizes of the recycled silicone materials are 0.1 - 1 mm. It shall be understood that the grain size of the recycled silicone materials influences significantly properties of final silicone rubber products, when the grain sizes are too big, dispersion of the recycled silicone materials in the silicone rubber materials is uneven, utility of the silicone rubber materials can be deteriorated, and consequently, surfaces of the final products are not smooth.

Preferably, the methyl vinyl silicone gum has a molecular weight of 550,000 to 650,000. Further preferably, the methyl vinyl silicone gum has a molecular weight of 580,000 to 620,000.

Preferably, the constitution controller is hydroxyl silicone oil; the silane coupling agent is vinyl trimethoxy silane (VTMO); and the releasing agents comprise at least one of zinc stearate, calcium stearate and barium stearate and preferably calcium stearate.

Preferably, physical standards for the recycled silicone rubber are Shore A hardness 22-58, elongation at break 302 - 801 %, tensile strength at break over 5.8 MPa and tearing strength over 2.0 × 10⁴ N/m.

The present invention further provides a method for preparing the recycled silicone rubber as defined in the foregoing technical solutions, comprising the following steps:
Adding the methyl vinyl silicone gum and the releasing agents to an internal mixer in one time and mixing for 10 - 20 minutes at lower than 80 °C;
Adding the white carbon black into the internal mixer for three times, adding the constitution controller to the internal mixer along with the white carbon black, and kneading for 1.5 - 2.5 hours at 90 - 130 °C after agglomeration of the white carbon black;
Adding the recycled silicone materials into the internal mixer after blending, adding the silane coupling agent along with the recycled silicone materials, vacuumizing and treating for 1.5-2.5 hours at 90-130 °C after agglomeration; and
After vacuumizing, cooling until 80 °C, discharging and obtaining the recycled silicone rubber.

It shall be comprehensible that, heating and vacuumizing is to have the fumed silica after surface treatment to react fully with the raw materials and disperse evenly in the methyl vinyl silicone gum, in the meantime, remove low molecular substances and moisture in materials for preparing the silicone rubber and improve physical performance of the silicone rubber product.

In the foregoing technical solutions, by adding the white carbon black to react with and reinforce the methyl vinyl silicone gum, thereafter adding the recycled silicone materials, the process is scientific, in the meantime, by adding the silane coupling agents vinyl trimethoxy silane, dispersity and binding ability with the silicone rubber of the recycled silicone materials can be improved, fabrication processes of each batch last only 6-8 hours and silicone rubber recycling efficiency has been improved. Compared with existing processes of degradation and recycling of recycled silicone materials by strong alkalies at high temperature conditions, the process according to the present invention is safer, more environment friendly and efficient. Furthermore, in the foregoing technical solutions, the recycled silicone materials are added synchronously when producing the silicone rubber, the recycled silicone materials are mixed evenly with the silicone rubber materials via the internal mixer, recycling and utilization efficiency of the silicone rubber has been greatly improved and a waste of the raw materials and environment pollution can be avoided.

Compared with the prior art, advantages and positive effects of the present invention are:
In the present invention, following demands of economic development and environment protection, a recycled silicone rubber and preparation method thereof has been provided. With the present method, the vulcanized silicone rubber is crushed physically and ground to be particles of certain grain sizes and the particles are taken as raw materials for producing silicone rubber so as to recycle and use the recycled silicone materials. On the basis of meeting requirements on hardness, elasticity, thermal resistance and breakage tensile strength etc., the silicone rubber obtained with the present method has effectively addressed the problems of high cost, high pollution and high risks associated with recycling of the vulcanized silicone rubber.

### Embodiments

Hereinafter technical solutions in embodiments of the present invention will be described clearly and completely, apparently, the embodiments described in the present invention are only some of the embodiments of the present invention rather than all. Based on the embodiments provided in the present invention, all other embodiments obtained by those of ordinary skill in the art without making creative effort shall fall within the protection scope of the present invention.

### Embodiment 1

Recycled I silicone rubber, raw materials thereof comprise: methyl vinyl silicone gum 100 parts, white carbon black 30 parts, recycled silicone materials 20 parts, hydroxyl silicone oil 2 parts, zinc stearate 0.2 parts, and vinyl trimethoxy silane 0.1 parts.

Preparation method:
Adding the methyl vinyl silicone gum and the zinc stearate into a vacuum internal mixer, kneading for 20 minutes (controlling temperature to be lower than 80 °C);
Adding the white carbon black and the hydroxyl silicone oil for three times, adding next white carbon black and hydroxyl silicone oil after agglomeration of the previously added white carbon black and the hydroxyl silicone oil, after all the white carbon black and the hydroxyl silicone oil have been added and agglomerated, heating by steaming the internal mixer to be 110 ± 20 °C, maintaining the temperature and mixing for 2 hours;
After mixing, adding the vinyl trimethoxy silane and the recycled silicone materials in 5 - 8 times, adding next vinyl trimethoxy silane and the recycled silicone materials when the previously added vinyl trimethoxy silane and the recycled silicone materials have agglomerated, after adding all and agglomeration, heating to 150 ± 20 °C, controlling a vacuum degree to be 0.07 ± 0.01 MPa, maintaining the temperature and vacuumizing for 2 hours; and
After vacuumizing, cooling to below 80 °C, discharging and obtaining the recycled silicone material silicone rubber.

### Embodiment 2

Recycled silicone material silicone rubber, raw materials thereof comprise: methyl vinyl silicone gum 100 parts, white carbon black 35 parts, recycled silicone materials 25 parts, hydroxyl silicone oil 2.5 parts, calcium stearate 0.2 parts, and vinyl trimethoxy silane 0.2 parts.

Preparation method thereof is the same as the preparation method used in embodiment 1.

### Embodiment 3

Recycled silicone rubber, raw materials thereof comprise: methyl vinyl silicone gum 100 parts, white carbon black 49 parts, recycled silicone materials 30 parts, hydroxyl silicone oil 3.5 parts, barium stearate 0.2 parts, and vinyl trimethoxy silane 0.2 parts.

Preparation method thereof is the same as the preparation method used in embodiment 1.

### Embodiment 4

Recycled silicone rubber, raw materials thereof comprise: methyl vinyl silicone gum 100 parts, white carbon black 55 parts, recycled silicone materials 45 parts, hydroxyl silicone oil 4 parts, barium stearate 0.5 parts and vinyl trimethoxy silane 0.3 parts.

Preparation method thereof is the same as the preparation method used in embodiment 1.

### Embodiment 5

Recycled silicone rubber, raw materials thereof comprise: methyl vinyl silicone gum 100 parts, white carbon black 60 parts, recycled silicone materials 60 parts, hydroxyl silicone oil 4 parts, zinc stearate 0.1 parts and vinyl trimethoxy silane 0.1 parts.

Preparation method thereof is the same as the preparation method used in embodiment 1.

### Comparative example 1

Proportions and ingredients of the recycled silicone rubber are the same as those in embodiment 1, the difference lies in that the grain size of the recycled silicone materials is 1.5 mm.

### Performance standards

To better explain effects of the recycled silicone rubber obtained in the embodiments of the present invention, performance standards and performance test results of the recycled silicone rubber obtained in the embodiments and the comparative example have been shown.

**Table 1 Performance standards and test results of the recycled silicone rubber obtained in embodiment 1**

| Test items | Testing methods | Performance standards | Performance testing data |
|---|---|---|---|
| Hardness Shore A | ASTM D-2240 | 20 ± 2 | 22 |
| Tensile strength at break | ASTM D-412 | Over 5 MPa | 5.8 |
| Elongation at break | ASTM D-412 | Over 700 | 801 |
| Tear strength | ASTM D-624 | Over 1.4 ^{∗} 10⁴ N/m | 1.6 ^{∗} 10⁴ |
| William plasticity | ASTM D-926 | 100 ± 15 | 103 |
| Surface smoothness | | Visual inspection | Smooth |

**Table 2 Performance standards and testing results of the recycled material silicone rubber obtained in embodiment 2**

| Test items | Testing methods | Performance standards | Performance testing data |
|---|---|---|---|
| Hardness Shore A | ASTM D-2240 | 35 ± 2 | 36 |
| Tensile strength at break | ASTM D-412 | Over 5 MPa | 6.5 |
| Elongation at break | ASTM D-412 | Over 500 | 551 |
| Tear strength | ASTM D-624 | Over 1.8 ^{∗} 10⁴ N/m | 2.1 ^{∗} 10⁴ |
| William plasticity | ASTM D-926 | 130 ± 15 | 135 |
| Surface smoothness | | Visual inspection | Smooth |

**Table 3 Performance standards and testing results of the recycled material silicone rubber obtained in embodiment 3**

| Test items | Testing methods | Performance standards | Performance testing data |
|---|---|---|---|
| Hardness Shore A | ASTM D-2240 | 50 ± 2 | 49 |
| Tensile strength at break | ASTM D-412 | Over 6.5 MPa | 6.8 |
| Elongation at break | ASTM D-412 | Over 450 | 470 |
| Tear strength | ASTM D-624 | Over 2.0 ^{∗} 10⁴ N/m | 2.2 ^{∗} 10⁴ |
| William plasticity | ASTM D-926 | 180 ± 15 | 190 |
| Surface smoothness | | Visual inspection | Smooth |

**Table 4 Performance standards and testing results of the recycled material silicone rubber obtained in embodiment 4**

| Test items | Testing methods | Performance standards | Performance testing data |
|---|---|---|---|
| Hardness Shore A | ASTM D-2240 | 60 ± 2 | 58 |
| Tensile strength at break | ASTM D-412 | Over 6 MPa | 6.2 |
| Elongation at break | ASTM D-412 | Over 400 | 420 |
| Tear strength | ASTM D-624 | Over 2.0 ^{∗} 10⁴ N/m | 2.1 ^{∗} 10⁴ |
| William plasticity | ASTM D-926 | 220 ± 15 | 230 |
| Surface smoothness | | Visual inspection | Smooth |

**Table 5 Performance standards and testing results of the recycled material silicone rubber obtained in embodiment 5**

| Test items | Testing methods | Performance standards | Performance testing data |
|---|---|---|---|
| Hardness Shore A | ASTM D-2240 | 70 ± 2 | 58 |
| Tensile strength at break | ASTM D-412 | Over 5.5 MPa | 6.0 |
| Elongation at break | ASTM D-412 | Over 250 | 302 |
| Tear strength | ASTM D-624 | Over 1.8 ^{∗} 10⁴ N/m | 2.0 ^{∗} 10⁴ |
| William plasticity | ASTM D-926 | 260 ± 15 | 272 |
| Surface smoothness | | Visual inspection | Smooth |

**Table 6 Performance standards and testing results of the recycled material silicone rubber obtained in comparative example 1**

| Test items | Testing methods | Performance standards | Performance testing data |
|---|---|---|---|
| Hardness Shore A | ASTM D-2240 | 20 ± 2 | 21 |
| Tensile strength at break | ASTM D-412 | Over 5 MPa | 5.5 |
| Elongation at break | ASTM D-412 | Over 700 | 767 |
| Tear strength | ASTM D-624 | Over 1.4 ^{∗} 10⁴ N/m | 1.3 ^{∗} 10⁴ |
| William plasticity | ASTM D-926 | 100 ± 15 | 106 |
| Surface smoothness | | Visual inspection | Smooth |

From data in the foregoing tables, it can be known that, the recycled silicone rubber provided in the present invention satisfies requirements on hardness, elasticity, heat resistance and breakage tensile strength etc. after mixing the raw materials such as methyl vinyl silicone gum and releasing agents and adding recycled silicone materials of a certain ratio and a certain grain size without increasing a mass ratio of the white carbon black. The recycled I silicone rubber obtained in the comparative example 1 can basically satisfy usage requirements in view of the performance test data. However, due to increase of the grain size of the recycled silicone materials, during visual inspection, it is found that for the recycled material silicone rubber obtained with the recycled silicone materials of a grain size of 1.5 mm, a surface of the silicone rubber has granular sensation, and surface smoothness is not satisfactory.

Furthermore, the recycled silicone rubber provided in the present invention uses rationally the recycled silicone materials to replace the methyl vinyl silicone gum (the recycled silicone materials occupy 1-60% of the silicone rubber), therefore, raw material cost of the silicone rubber has been reduced, the cost is reduced by 20-40%, in the meantime, environmental pollution brought by degradation processes with strong alkalies has been avoided. Further, in the silicone rubber, by adding the silicone rubber recycled silicone materials a proportion of the white carbon black is reduced, and compared with adding the white carbon black, mixing and agglomeration time is shorter, a production duration of each batch is reduced from 8-10 hours to be 6-8 hours, and production efficiency has been improved greatly.

## Claims

1. A recycled silicone rubber, comprising following ingredients and raw materials in part by weight: methyl vinyl silicone gum 100 parts, white carbon black 30-60 parts, recycled silicone materials 1-60 parts, a constitution controller 0.3-4 parts, a silane coupling agent 0.1-0.3 parts, and releasing agents 0.1-0.5 parts.

2. The recycled silicone rubber according to claim 1, wherein a specific surface area of the white carbon black is 175 - 225 m²/g.

3. The recycled silicone rubber according to claim 1, wherein the white carbon black is white carbon black that has not undergone surface treatment, and is selected from fumed silica or precipitation silica.

4. The recycled silicone rubber according to claim 1, wherein the recycled silicone materials are vulcanized silicone rubber powders obtainable by physical crushing and grinding.

5. The recycled silicone rubber according to claim 4, wherein after grinding, the recycled silicone materials are passed through a screen of 30 - 80 meshes.

6. The recycled silicone rubber according to claim 4, wherein grain sizes of the recycled materials are 0.1 - 1 mm.

7. The recycled silicone rubber according to claim 1, wherein the methyl vinyl silicone gum has a molecular weight of 550,000 to 650,000.

8. The recycled silicone rubber according to claim 1, wherein the constitution controller comprises hydroxyl silicone oil; the silane coupling agent comprises vinyl trimethoxy silane; and the releasing agents comprise at least one of zinc stearate, calcium stearate and barium stearate and preferably calcium stearate.

9. The recycled silicone rubber according to any of claims 1 - 8, wherein physical standards for the recycled silicone rubber are Shore A hardness 22-58, elongation at break 302 - 801 %, tensile strength at break over 5.8 MPa and tearing strength over 2.0 × 10⁴ N/m.

10. A method for preparing the recycled silicone rubber as defined in any of claims 1-10, comprising the following steps:
adding the methyl vinyl silicone gum and the releasing agents to an internal mixer in one time and mixing for 10 - 20 minutes at lower than 80 °C;
adding the white carbon black into the internal mixer for three times, adding the constitution controller to the internal mixer along with the white carbon black, and kneading for 1.5 - 2.5 hours at 90 - 130 °C after agglomeration of the white carbon black;
adding the recycled silicone materials into the internal mixer after blending, adding the silane coupling agent along with the recycled silicone materials, vacuumizing and treating for 1.5-2.5 hours at 90-130 °C after agglomeration; and
after vacuumizing, cooling until 80 °C, discharging and obtaining the recycled silicone rubber.
